(19)

Europäisches
Patentamt
European
Patent Office
Office européen
des brevets

(11) **EP 1 897 612 A1**

(12) **EUROPEAN PATENT APPLICATION**

(43) Date of publication:
**12.03.2008 Bulletin 2008/11**

(51) Int Cl.:
**B01J 19/00** *(2006.01)*

(21) Application number: **06120135.6**

(22) Date of filing: **05.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Danmarks Tekniske Universitet 2800 kgs. Lyngby (DK)**

(72) Inventors:
• **Quaade, Ulrich Joachim 2880 Bagsværd (DK)**

• **Hansen, Ole 2970 Hørsholm (DK)**
• **Johansson, Sven Martin 2800 Lyngby (DK)**
• **Jensen, Søren 2400 Copenhagen NV (DK)**
• **Thorsteinsson, Sune 2970 Hørsholm (DK)**

(74) Representative: **Plougmann & Vingtoft A/S Sundkrogsgade 9 2100 Copenhagen (DK)**

(54) **A microreactor**

(57)     The present invention relates to a microreactor (1) with a reaction chamber (2) and a heating element (3). A first channel (4) connects the reaction chamber (2) with the surroundings, and an auxiliary channel (5) is connected to the reaction chamber (2) and has a capillary hole (6) for pressure reduction. The reaction chamber, the first channel, and the auxiliary channel are integrally formed in a single, monolithic element (10), such as silicon. Also the heating element is produced in and/or on the single, monolithic element (10). The microreactor provides fast real-time access to monitor the chemical reactions to be studied in the reaction chamber (2) via the capillary leak in combination with efficient heating and cooling. As compared to the prior art there is no need for forced cooling or high power supplied to the microreactor (1).

Fig. 1

EP 1 897 612 A1

## Description

Field of the invention

The present invention relates to a microreactor where it is possible to control and study chemical reactions, incl. catalytic, on a short time scale and/or potentially dangerous reactions under well-controlled conditions.

Background of the invention

Microreactors, where the reactor dimensions are in millimetre to submillimetre range, offer generally high heat and mass transfer. Metallic, ceramic as well as semiconductor microreactors have been realized, and are used for high throughput screening of catalysts, point of use production of chemicals by replication, and execution of very exothermic reactions, exploding when executed in conventional reactors.

Point of use synthesis of chemicals could for instance be hydrogen synthesis for supplying fuel cells in portable electronics devices or small production plants (less than a few tons a year), where the capacity is easily increased by adding a new reactor module. Additionally, chemical reactions can be performed under more aggressive conditions which increase the yield. In such systems, a single defective microreactor leaks only a small amount of chemicals, and by appropriate electronics the failed microreactor can easily be blocked.

Microreactors for high throughput catalyst screening can be realized on a silicon substrate using MEMS fabrication techniques, where a multitude of sensors and actuators can be integrated with the microreactor.

In Review of Scientific Instruments, Vol. 75, 10, (2004), p. 3345-3347 such a microsystem with an integrated capillary leak hole is disclosed. The integrated capillary leak minimizes the so-called dead volume in the system resulting in increased time resolution. Application of such a microsystem enables relatively fast real-time access to e.g. temperature programmed desorption studies that were hitherto difficult to study under controlled conditions. A disadvantage of that microsystem is the need for external heating to be provided next to the microreactor, and due to the relatively high thermal mass of the microsystem the limit for cooling rates is quickly reached.

A remedy for this disadvantage is shown in Chemical Eng. Journal, Vol. 101, (2004), p. 217-224, where extensive cooling by a fluid stream is provided adjacent to a steel microreactor so as to enable fast thermal cycling i.e. reaching thermal rates of 40 K/s. However, this solution requires a relatively complicated mounting and experimental setup because excellent thermal connection between the heating and cooling elements has to be provided simultaneously. Moreover, this solution has a large power consumption which also limits the design possibilities.

Hence, an improved microreactor would be advantageous, and in particular a more efficient and/or reliable microreactor would be advantageous.

Summary of the invention

Accordingly, the invention preferably seeks to mitigate, alleviate or eliminate one or more of the above mentioned disadvantages singly or in any combination. In particular, it may be seen as an object of the present invention to provide a microreactor that solves the above mentioned problems of the prior art with studying chemical reactions.

This object and several other objects are obtained in a first aspect of the invention by providing a microreactor, said reactor comprising:

- a reaction chamber defining a cavity,
- a heating element,
- a first channel connecting the reaction chamber with the surroundings, and
- an auxiliary channel connected to the reaction chamber, said auxiliary channel comprising a capillary hole for pressure reduction,

wherein the reaction chamber, the first channel, and the auxiliary channel are integrally formed - at least partly - in a single, monolithic element, and

wherein the heating element is produced - at least partly - in and/or on the single, monolithic element.

The invention is particularly, but not exclusively, advantageous for obtaining a microreactor that provides fast real-time access to monitor the chemical reactions to be studied in the reaction chamber via the auxiliary channel comprising a capillary leak in combination with efficient heating and cooling. As compared to the prior art there is no need for forced cooling or high power supplied to the microreactor.

The simplicity of the microreactor according to present invention further facillitates large scale production using conventional micromachning for e.g. semiconductor materials and thereby enables a low unit price. This is important as for example finding an optimal catalyst, and/or reaction conditions for a catalyst, usually involves an extensive screening by a large number of experiments.

Beneficially, the reaction chamber, and possibly also the first and the auxiliary channel, may be arranged to be partly closed by a corresponding top element. The top element need not necessarily be a plane surface, but in combination with the microreactor itself a substantially tight closure of the microreactor should be provided in order to provide a microreactor usefull under practical laboratory conditions. Possibly, the top element itself may comprise one or more recesses adapted to form part of the reaction chamber, the first channel and/or the auxiliary channel as this may simplify the manufacturing and/or the assembly of the microreactor.

In one embodiment, the microreactor and/or the top element may further comprise a second channel connecting the reaction chamber with the surroundings of the microreactor in order to have a sufficient gas flow out of the reaction chamber when the first channel is used only for gas flow into the reaction chamber. However, this second channel need not be present if the auxiliary channel and the capillary hole is capable of providing a sufficient gas flow out of the reaction chamber.

The auxiliary channel (comprising the capillary hole) may be connected to the reaction chamber via the first channel and/or the second channel depending on where and when the gas flowing out of the capillary hole is most advantageously analyzed. Thus, once the general principle of the present invention is realized many combinations and variations of gas interconnections are readily within reach of the skilled person.

In another embodiment, the microreactor may further comprise a temperature sensing element, said element being produced - at least partly - in and/or on the single, monolithic element in order to provide an easy and direct way of measuring the temperature in the microreactor during operation.

In an embodiment of the invention, a second reaction chamber may be arranged either parallel or in series to the reaction chamber. Thus, multiple reactions (independent or correlated) and/or several temperatures may be studied in one microreactor simultaneously thereby expanding the use of the microreactor.

Beneficially, the capillary hole may be a hole with a length ($l$) to average diameter ($d$) ratio of at least 2, preferably at least 5, or even more preferably at least 10 to provide effective pressure reduction. Likewise, the flow resistance ($Rh$) of the capillary hole may be at least $9.7 \times 10^7$ Pa/sccm, preferably at least $1.37 \times 10^9$ Pa/sccm, or even more preferably at least $1.37 \times 10^{10}$ Pa/sccm (air at standard conditions) to provide effective pressure reduction.

In an advantageous embodiment, the capillary hole may be thermally arranged relative to the heating element so that upon thermal cycling of the heating element, the resulting temperature of the capillary hole varies maximum 10%, preferably maximum 5%, or more preferably maximum 1%, of the temperature variation of the heating element in order to reduce the effect of the heating element on the pressure reduction performed by the capillary hole.

Alternatively or additionally, the capillary hole may be positioned adjacent to a second heating element, and optionally also a temperature sensing element to monitor and/or compensate variations of the temperature of the hole.

A catalyst support may be provided in the reaction chamber, the catalyst support may preferably comprise a porous structure. The support could for example be porous silicon (Si) or silicon dioxide ($SiO_2$). Alternatively or additionally, the reaction chamber may comprise a catalyst, the catalyst being introduced in the chamber during manufacturing of the microreactor. This may be particularly beneficial if numerous similar experiments are to be performed, e.g. screenings of catalysts and/or catalytic reaction conditions.

The heating element and/or the temperature sensing element may comprise a metal, a metal alloy, a metal silicide or a metal nitride. Particularly interesting compounds are platinum, titanium wolfram compounds, titanium nitride compounds, galium nitride compounds, and nickel silicides due to the good thermal stability and/or resistance towards oxidation.

The heating element may be thermally arranged relative to the reaction chamber with an effective thermal diffusion time constant (t_dif_h-rc) of maximum 200 microseconds, preferably maximum 70 microseconds, or more preferably maximum 20 microseconds. The short thermal response time of the reaction chamber with respect to the heating element faciliates rapid thermal cycling as heat is rapidly transferred to the reaction chamber. As will be explained below the necessary assumptions for introduction of a thermal diffusion time constant are not very often rigorously fulfilled under real applications. Nevertheless, under many practical conditions an effective thermal diffusion time constant may be defined to a reasonable approximation.

Similarly, the reaction chamber may be thermally arranged relative to the exterior of the microreator for having an effective thermal diffusion time constant (t_dif_rc) of maximum 2 seconds, preferably maximum 0.5 seconds, or more preferably maximum 0.1 seconds. The short thermal response time of the reaction chamber faciliates rapid thermal cycling as heating is rapidly transferred away from the reaction chamber. Typically, the microreactor is positioned in an interface device having power and gas connections and through the interface device heat may also be transferred from the exterior (e.g. a interfacing surface) of the microreactor to the interface device, the interface device for example being arranged with an abutting heatsink.

The heating element may be thermally arranged relative to the reaction chamber to provide a larger amount of heat to a perimenter portion of the reaction chamber relative to a central position of the reaction chamber in order to provide a more uniform thermal distribution within the reaction chamber. Thus, if the reaction chamber is of a box-like geometry more heating can be applied in the corners of the reaction chamber. If the reaction chamber has an elongated structure, the heating element may be thermally arranged relative to the reaction chamber to provide a larger amount of heat to an end section relative to a central position of the reaction chamber.

In a second aspect, the present invention relates to a method for manufacturing a microreactor, the method comprises the steps of:

-   providing a reaction chamber defining a cavity,

- providing a heating element,
- providing a first channel connecting the reaction chamber with the surroundings, and
- providing an auxiliary channel connected to the reaction chamber, said auxiliary channel comprising a capillary hole for pressure reduction,

wherein the reaction chamber, the first channel, and the auxiliary channel are integrally formed - at least partly - in a single, monolithic element, and
wherein the heating element is produced - at least partly - in and/or on the single, monolithic element.

The monolithic element may be selected from the group of: silicon, germanium, carbon, aluminum, and any alloy thereof. Also steel, silicon carbide, glass, and ceramics may be suited for use as a single, monolithic element according to the present invention.

Beneficially, the reaction chamber, the auxiliary channel and/or the first channel may be formed - at least partly - by etching, micro milling, micro drilling, electric discharge manufacturing (EDM), casting, and/or laser ablation in/on the monolithic element. Similarly, the second channel according to the first aspect of the invention may be manufactured by any of the aforementioned manufcaturing methods.

The first and second aspect of the present invention may each be combined with any of the other aspect. These and other aspects of the invention will be apparent from and elucidated with reference to the embodiments described hereinafter.

Brief description of the Figures

The present invention will now be explained, by way of example only, with reference to the accompanying Figures, where

Figure 1 is a schematic drawing of the microreactor according to the present invention,

Figure 2 is a schematic cross-sectional drawing of the microreactor according to the present invention,

Figure 3 is a schematic drawing of another microreactor according to the present invention,

Figure 4 is a schematic drawing, in a plane view, of a heating element and temperature sensing element of the microreactor according to the present invention,

Figure 5 is schematic cross-sectional drawing of how the microreactor according to the present invention may be interfaced,

Figure 6 is a schematic drawing of a microreactor with reaction chambers connected in series according to the present invention,

Figure 7 is a drawing of a heating element design (top) and a model calculation (bottom) of the corresponding temperature distribution in the reaction chamber,

Figure 8 is a graph showing the measured temperature as a function of time in the microreactor according to the present invention, and

Figure 9 is a flowchart of a method according to the invention.

Detailed description of an embodiment

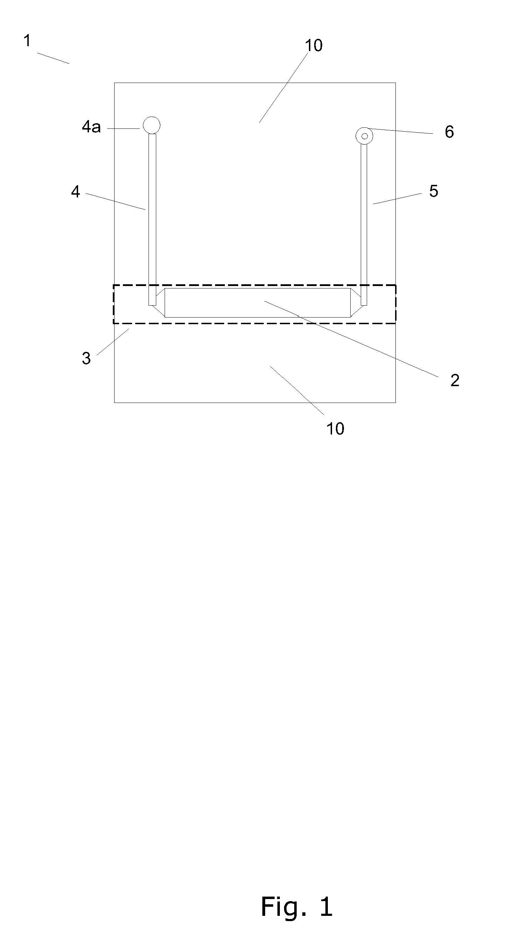

Figure 1 is a schematic drawing of the microreactor 1 according to the present invention as seen from a top view. The microreactor 1 comprises a reaction chamber 2 that defines a cavity suitable for chemical reactions, incl. catalytic, to take place under well controlled conditions. To supply heat to the reaction chamber 2 a heating element 3 is provided as indicated by the dashed lines underneath the reaction chamber 2. A first channel 4 connects the reaction chamber 2 with the surroundings through the inlet/outlet 4a.

Additionally, an auxiliary channel 5 is connected to the reaction chamber 2, the auxiliary channel comprises a capillary hole 6 for pressure reduction of the reaction gases conveyed from the reaction chamber 2. The capillary hole 6 has a narrow or elongated form that allows for pressure reduction with a finite pumping speed at the exit and for example atmospheric pressure at the entrance of the hole 6 i.e. the gasses will have a lower pressure upon leaving the capillary hole 6 relative to the pressure in the auxillary channel 5.

The reaction chamber 2, the first channel 4, and the auxiliary channel 5 are integrally formed in a single, monolithic element 10, and additionally the heating element 3 is produced in and/or on the single, monolithic element 10. The single, monolithic element 10 can be a single piece of mono-crystalline silicon (Si), but the teaching of the present invention is not limited to this embodiment. Rather, the invention can also be embodied in a range of other materials/alloys and/or structures such as aluminium, silicon carbide, machineable ceramics (e.g. Macor® consisting of approximately 55% fluorophlogopite mica and 45% borosilicate glass.), and steel. Silicon has the advantage that conventional micro-machining of semiconductor materials can be applied, and in the remaining part of the description the single, monolithic element 10 is taken to be silicon (Si).

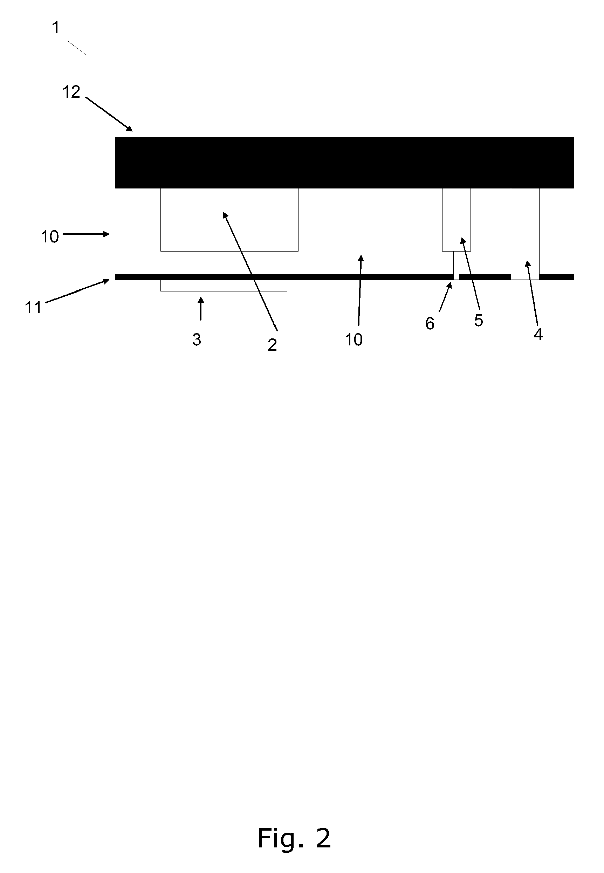

Figure 2 is a schematic cross-sectional drawing of the microreactor 1 similar to the drawing of Figure 1, but in Figure 2 the portions of the first channel 4 and the auxiliary channel 5 that are connected to the reaction chamber 2 are omitted for reasons of clarity. The microreactor 1 is closed by an appropriate top plate 12 for example in borosilicate glass, e.g. a Pyrex® lid, fitting the microreactor 1. In one embodiment, recesses can be provided in the top plate 12 to form part of the channels 4 and 5, possibly also part of the reaction chamber 2.

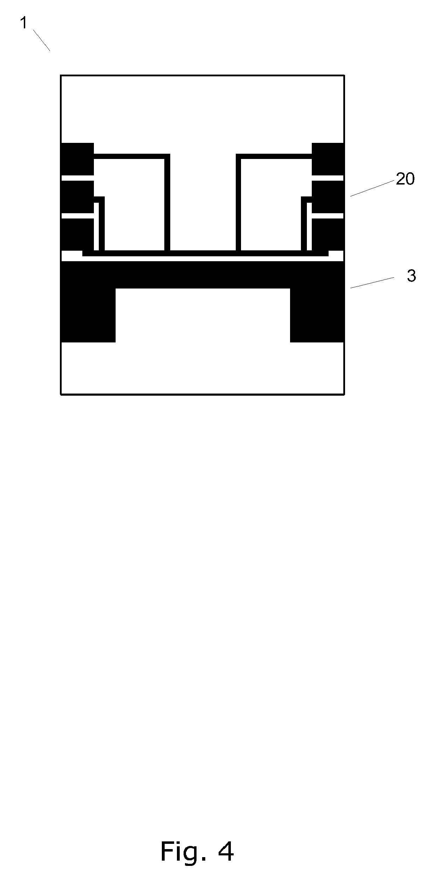

The heating element 3 is a thin metal, metal alloy, metal silicide or metal nitride film that is arranged for resistive heating. Thus, a current flowing through the heating element 3 enables generation of heat, and control and monitoring of the said current in turn facilitates control of the heat generated as it will readily be understood by the person skilled in the art. To facilitate fast and efficient heat transport from the heating element 3 to the reaction chamber 2, the heating element 3 is preferably located in the immediate vicinity of the reaction chamber 2. The heating element 3 can be positioned on thin insulating layer 11, e.g. a silicon dioxide ($SiO_2$) layer or similar. On the thin insulating layer 11 a temperature sensing element (see Figure 4) can be provided advantageously.

In this cross-sectional view of Figure 2, the structure of the capillary hole 6 can better be appreciated. Thus, the capillary hole 6 is positioned with an first opening towards the auxillary channel 5 connected to the reaction chamber 2, and a second opening facing the exterior of the microreactor 1. The first opening is smaller than the width of the auxillary channel 5 in order to provide pressure reduction at the second opening of the hole 6. The geometry of the capillary hole can be tubular but need not be limited to this geomtry. Rather, another suitable geometry for pressure reduction can be choosen.

For the specific case of tubular geometry of the capillary hole 6, the gas flow in the hole having a length *l* and a diameter d can be described by the familiar Knudsen number $\lambda/d$, where $\lambda$ is the mean free path of the molecules in the gas. For $\lambda/d$ smaller than 0.001, the flow is viscous, and for $\lambda/d$ larger than 1, the flow is decribed as molecular. In between, the flow is described as intermediate. Refering to Journal of Applied Physics, Vol. 97, 044906 1-4 (2005) by the present inventors, it can be shown that for many practical applications the molecular flow regime ($\lambda/d > 1$) can be neglected, and a sufficient pressure reduction to interface with gas analysis equipment, such as a mass spectrometer (MS), can be achieved with the capillary hole 6 having a length *l* of 10 micrometer, 20 micrometer, 30 micrometer, 40 micrometer, 50 micrometer, 60 micrometer, 70 micrometer, 80 micrometer, 90 micrometer or 100 micrometer (and any interval there between), and a diameter d of 1 micrometer, 2 micrometer, 3 micrometer, 4 micrometer, 5 micrometer, 6 micrometer, 7 micrometer, 8 micrometer, 9 micrometer or 10 micrometer (and any interval there between), respectively. Of course, the diamensions of the capillary hole can and should preferably be designed with respect to the specific application of the microreactor 1 taking into consideration the mass(es) of the gas(ses), the pressure range, the temperature range, the pumping speed of one or more associated vacuum pumps, and the working range of a connected gas analysis device. The total size of the microreactor 1 is typically 16 mm x 20 mm x 350 micrometer, and the reactor chamber 2 is 9 mm long. For further details on the manufacturing of the capillary hole 6 see Journal of Applied Physics, Vol. 97, 044906 1-4 (2005).

The pressure reduction performed by the capillary hole 6 depends on the temperature of the hole, which is influenced by the heat generated by the heating element 3. Thus, in order to have a well controlled temperature in the hole 6, the influence of the heating element 3 should be taken into consideration. Possibly, this influence can be measured by a dedicated temperature sensing element near or adjacent to the hole 6. Furthermore, said influence can be compensated for by dedicated heating and/or cooling means (not shown in Figure 2) adapted for stabilising the temperature of the hole 6 in time. Thus, a dedicated heating element can have an heating cycle in counter phase with a heating cycle of the heating element 3 to provide a stabile temperature in the hole 6. Additionally or alternatively, the capillary hole 6 can be thermally arranged relative to the heating element 3 so that upon thermal cycling of the heating element 3, the resulting temperature of the capillary hole varies maximum 10%, preferably maximum 5%, or more preferably maximum 1%, of the temperature variation of the heating element 3. This can be achieved by having a sufficient distance between the hole 6 and the heating element 3, by providing thermal isolation between the hole 6 and the heating element 3, and/or by removing silicon 10 between the hole 6 and the heating element 3 to lower the thermal conductance there between.

It is contemplated that a capillary hole formed in single, monolithic element with a dedicated heating element and optionally a dedicated temperature sensing element - without a reaction chamber - can constitute a separate aspect of the invention. The dedicated heating element and optionally the dedicated temperature sensing element can be produced - at least partly - in and/or on the single, monolithic element. This aspect of the invention can be applied for mounting on existing reaction chambers to provide an advantageous, i.e. thermally stable, gas interface to a gas analysis device.

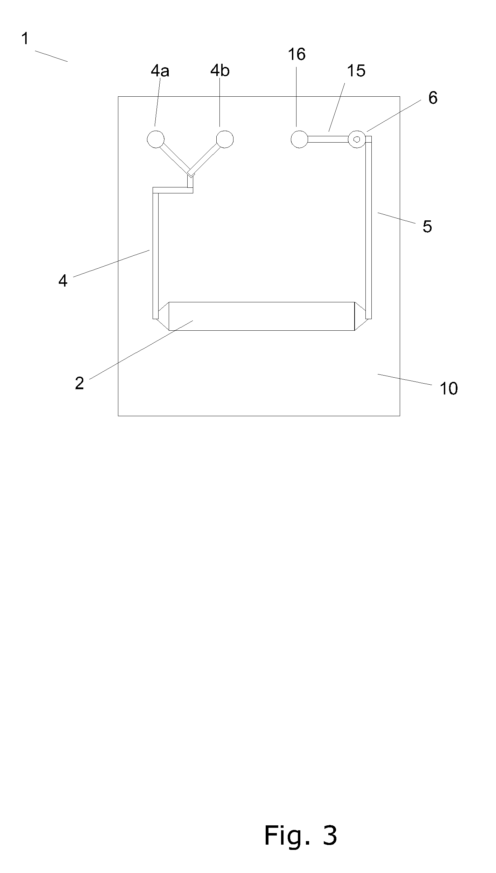

Figure 3 is a schematic drawing of another microreactor according to the present invention similar to the drawing of Figure 1. However, as seen in Figure 3 the first channel 4 has two inlets 4a and 4b. This could be for example two separate inlets 4a or 4b for introducing two different gasses to be reacted in the reaction chamber 2. In particular, explosive mixtures (e.g. methane and oxygen) can be studied beneficially within this embodiment. Additionally, the auxiliary channel 5 is - in this embodiment- connected to a second channel 15 having a separate outlet 16. This embodiment is particularly relevant if the gas flow through the reaction chamber 2 is too large to be handled only by the outlet provided by the capillary hole 6. Many other possible design variations with respect to the different connecting channels 4, 5 or 15 are readily available to the skilled person once the teaching of the present invention is appreciated. One variation can be to connect directly the capillary hole 6 with the reaction chamber 2 thereby minimizing or effectively eliminating the auxiliary channel 5. Another variation can be to position the auxiliary channel 5, and thereby the capillary hole 6, so as to provide contact with reaction gasses prior to entering the reaction chamber 2, thus enabling gas analysis of these gasses (the reactants). This can be performed with or without simultaneous gas analysis of any resulting gasses (the products) produced in the reaction chamber 2.

Figure 4 is a schematic drawing, in a plane view, of a heating element 3 and a temperature sensing element 20 of the microreactor 1. The temperature sensing element 20 can be a conventional thermocouple, or the temperature sensing element 20 can be adapted to be operated by resistive temperature sensing, where a known resistance is converted to a temperature value. In the temperature sensing element 20 shown in Figure 4, six contact pads are provided to facilitate four point resistance measurements at different regions of the reaction chamber 2.

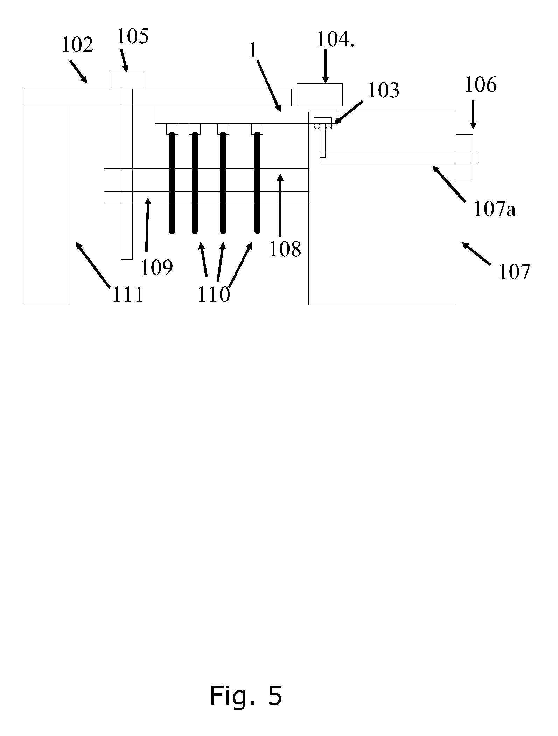

Figure 5 is a schematic cross-sectional drawing of how the microreactor 1 according to the present invention may be interfaced. The microreactor 1 is positioned on a metal interface block 107 and a support 111 in between a set of spring loaded probes 110 and an aluminium lid 102. One or more screws 105 are arranged for raising the probes 110 against the microreactor 1. The probes 110 are fitted in an electrically insulating material 108 (e.g. a Macor® plate) on top of an aluminium plate 109 with threads. The gas inlets, outlet and the capillary hole (not shown in Figure 5) are positioned in relation to gas conduits 107a in the block 107 to provide gas access via standard gas fittings 106. The gas inlets, outlet and the capillary hole are fitted with gaskets 103 and an opposing rod 104 to obtain a gas tight interface.

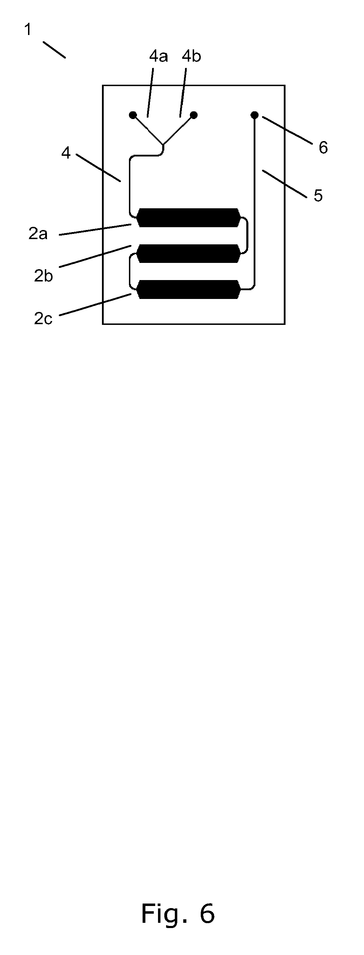

Figure 6 is a schematic drawing of a microreactor 1 with reaction chambers 2a, and 2b, and 2c connected in series. As also shown in Figure 3, several gas inlets 4a and 4b are present to feed the reaction chambers 2a, and 2b, and 2c through the first channel 4. Each reaction chamber 2a, and 2b, or 2c can have a separate heating element (not shown) to facilitate multi-stage chemical reactions to take place a different temperatures. Similarly, each reaction chamber 2a, and 2b, or 2c can have a separate auxiliary channel and corresponding capillary hole in order to facilitate gas analysis for each reaction chamber.

In general, the reaction chamber 2 of the microreactor can advantageously have a homogeneous internal cavity, preferably of a high symmetry e.g. mirror symmetry along an elongated form, in order to have well-controlled conditions for the chemical reactions taking place in the reaction chamber 2. Thus, a highly inhomogeneous reaction chamber 2 could cause mass transport phenomena to influence the chemical reactions in a manner not desirable. However, in some cases a highly inhomogeneous spatial form of the reaction chamber 2 could be relevant e.g. for gas mixing in the chamber 2.

Likewise, the temperature distribution within the reaction chamber 2 should be as uniform as possible. This can be obtained within certain limits by appropriate design of the microreactor 1, in particular the thermal arrangement of the heating element 3 relative to the reaction chamber 2. Preferably, the form of the heating element 3 is altered to provide thermal uniformity within the reaction chamber 2. For a typical microreactor 1 heat conduction is the dominant way of heat transfer. Heat conduction is described by Fourier's law:

$$\mathbf{J}_Q = -\kappa \nabla T \quad (1)$$

where $\mathbf{J}_Q$ is the heat flux density, and $K$ is thermal conductivity (can be temperature dependent). For a range of geometries, equation (1) can be solved, either analytically or numerically, as it will be appreciated by a person skilled in the art. For thermal cycling of the microreactor transients in time are important to consider. In the case, where no temperature dependency of the thermal conductivity is assumed, and where no heat is generated in the region considered, an ordinary diffusion equation (2) is obtained in temperature $T$;

$$\frac{\partial T}{\partial t} = \frac{\kappa}{\rho c} \nabla^2 T \quad (2)$$

where $p$ is the density and c the heat capacity. The unit of $k/pc$ is $m^2s^{-1}$, and this quantity is known as the thermal diffusivity $D\_T$. Applying an initial temperature distribution and proper boundary conditions, it can be shown that steady state is reached exponentially with a diffusion time constant t_dif given by:

$$t\_diff = (l\_diff)^2 / D\_T \quad (3)$$

where $l\_diff$ is the so-called diffusion length, which is roughly a measure of the distance to the heat source. In spite of the various assumptions made for obtaining equation (3), i.e. the diffusion time constant, this equation nevertheless can be applied to a good approximation under many practical conditions. Thus, even though thermal diffusivities usually depend on the temperature, it is a fair approximation within a limited temperature interval to neglect this temperature dependence.

In order to obtain a uniform temperature distribution within the reaction chamber 2, the present inventors have conducted a series of modeling and tests of shape and form of the heating element 3. For a reaction chamber 2 with an elongated structure, the heating element 3 can be thermally arranged relative to the reaction chamber 2 so as to provide a larger amount of heat to an end section relative to a central position of the reaction chamber 2. Thereby the large heat loss at the end sections can be compensated for. This can be done in different ways. Firstly, a single heating element 3 can be adapted to generate more heat at the end sections of the reaction chamber 2 by having contracted width and/or thickness at the end sections. This increases the resistance and in turn increases the heat generated there. Secondly, a plurality of heating elements 3 can be provided, for example arranged in parallel with the elongated structure of the reaction chamber 2. Thirdly, the shape of the heating element 3 can be curled and/or meandering where more heat is to be generated. Finally, one or more of these design options can be combined with one another.

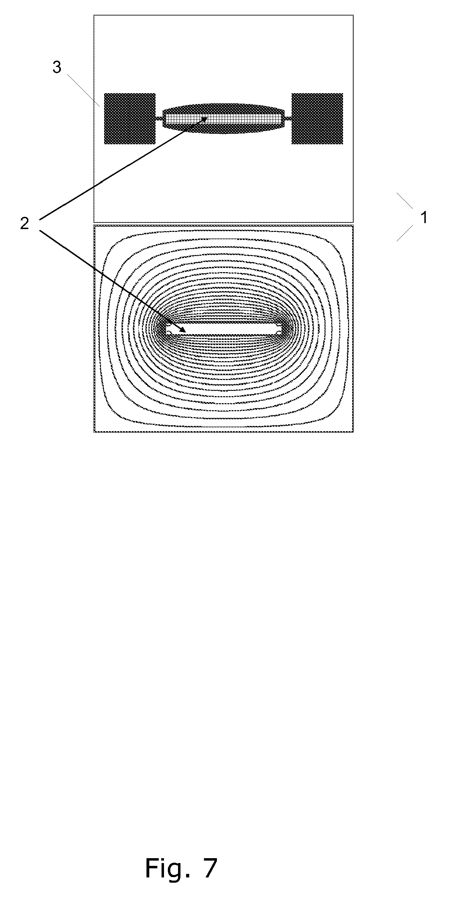

Figure 7, top, shows a plane view of a microreactor 1 where only the reaction chamber 2 (indicated with grids) and the heating element 3 are drawn for the sake of clarity. The reaction chamber 2 has a rectangular profile and underneath the chamber the heating element 3 is positioned. The heating element 3 similarly has an elongated profile surrounding the profile of the chamber 2 as seen in Figure 7. Near the end portions of the reaction chamber 2, the heating element 3 is contracted so as to provide a larger heat generation at the two end portions. Figure 7, bottom, shows the corresponding isothermal curve distribution when the reaction chamber 2 has a target temperature of 300 degrees Celsius. The difference between each isothermal curve is 15 degrees Celsius, and it is observed that the temperature within the reaction chamber 2 is quite uniform with only isothermal curves present at the corners.

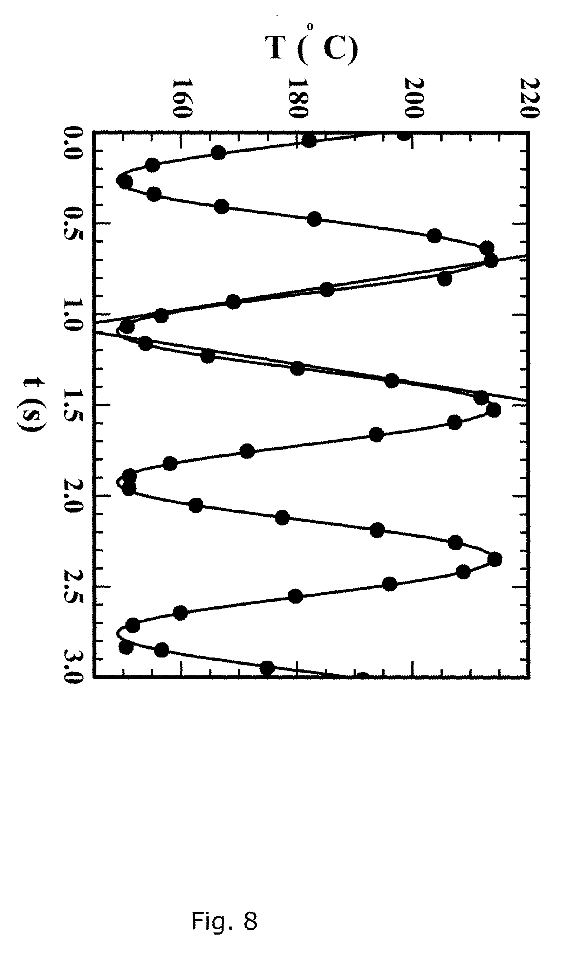

Figure 8 is a graph showing the measured temperature, T, as a function of time, *t*, in the microreactor 1. The power supplied to the heating element 3 is varied sinusoidally with a frequency of 1.2 Hz. The highest temperature amplitude without the microreactor malfunctioning was 32.5°C. The straight line fits shown in the graph of Figure 8 have a numerical slope of approximately 200°C/s. It should be noted that this high temperature rate is obtained without any kind of active cooling performed on the microreactor 1.

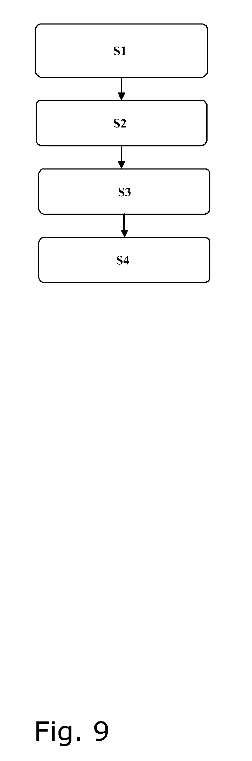

Figure 9 is a flowchart of a method according to the invention. The method comprises the steps of:

- **S1** providing a reaction chamber 2 defining a cavity,

- **S2** providing a heating element 3,

- **S3** providing a first channel 4 connecting the reaction chamber with the surroundings, and

- **S4** providing an auxiliary channel connected to the reaction chamber, said auxiliary channel comprising a capillary hole for pressure reduction,

wherein the reaction chamber, the first channel, and the auxiliary channel are integrally formed - at least partly - in a single, monolithic element 10, and wherein the heating element is produced - at least partly - in and/or on the single, monolithic element 10. The steps performed according to the method need not be performed in the above listed sequence. Simillarly, some steps may be performed simultanuously.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A microreactor (1), said microreactor comprising:

   - a reaction chamber (2) defining a cavity,
   - a heating element (3),
   - a first channel (4) connecting the reaction chamber (2) with the surroundings, and
   - an auxiliary channel (5) connected to the reaction chamber (2), said auxiliary channel comprising a capillary hole (6) for pressure reduction,

   wherein the reaction chamber, the first channel, and the auxiliary channel are integrally formed - at least partly - in a single, monolithic element (10), and wherein the heating element is produced - at least partly - in and/or on the single, monolithic element (10).

2. A microreactor according to claim 1, wherein at least the reaction chamber is arranged to be partly closed by a corresponding top element (12).

3. A microreactor according to claim 2, wherein the top element (12) comprises one or more recesses adapted to form part of the reaction chamber (2), the first channel (4) and/or the auxiliary channel (5).

4. A microreactor according to any of claims 1-3, wherein the microreactor (1) and/or the top element (12) further comprises a second channel (15) connecting the reaction chamber (5) with the surroundings.

**5.** A microreactor according to claim 1 or 4, wherein the auxiliary channel (5) is connected to the reaction chamber (2) via the first channel (4) and/or the second channel (15).

**6.** A microreactor according to claim 1 further comprising a temperature sensing element (20), said element being produced - at least partly - in and/or on the single, monolithic element (10).

**7.** A microreactor according to claim 1 further comprising a second reaction chamber (2b, 2c) arranged either parallel or in series to the reaction chamber (2a).

**8.** A microreactor according to claim 1, wherein the capillary hole (6) is a hole with a length ($l$) to average diameter ($d$) ratio of at least 2, preferably at least 5, or even more preferably at least 10.

**9.** A microreactor according to claim 1, wherein the flow resistance (Rh) of the capillary hole (6) is at least 9.7 x $10^7$ Pa/sccm, preferably at least 1.37 x $10^9$ Pa/sccm, or even more preferably at least 1.37 x $10^{10}$ Pa/sccm, for air at standard conditions.

**10.** A microreactor according to claim 1, wherein the capillary hole (6) is thermally arranged relative to the heating element (3) so that upon thermal cycling of the heating element, the resulting temperature of the capillary hole varies maximum 10%, preferably maximum 5%, or more preferably maximum 1%, of the temperature variation of the heating element.

**11.** A microreactor according to claim 1, wherein the capillary hole (6) is positioned adjacent to a second heating element, and optionally a temperature sensing element.

**12.** A microreactor according to claim 1, wherein a catalyst support is provided in the reaction chamber (2), the catalyst support preferably comprising a porous structure.

**13.** A microreactor according to claim 1 or claim 12, wherein the reaction chamber (2) comprises a catalyst, the catalyst being introduced in the chamber during manufacturing of the microreactor (1).

**14.** A microreactor according to claim 1 or claim 6, wherein the heating element (3) and/or the temperature sensing element (20) comprises a metal, a metal alloy, a metal silicide or a metal nitride.

**15.** A microreactor according to claim 1, wherein the heating element (3) is thermally arranged relative to the reaction chamber (2) with an effective thermal diffusion time constant (t_dif_h-rc) of maximum 200 microseconds, preferably maximum 70 microseconds, or more preferably maximum 20 microseconds.

**16.** A microreactor according to any of claims 1-3, wherein the reaction chamber (2) is thermally arranged relative to the exterior of the microreator (1) for having an effective thermal diffusion time constant (t_dif_rc) of maximum 2 seconds, preferably maximum 0.5 seconds, or more preferably maximum 0.1 seconds.

**17.** A reaction chamber according to claim 1, wherein the heating element (3) is thermally arranged relative to the reaction chamber (2) to provide a larger amount of heat to a perimeter portion of the reaction chamber relative to a central portion of the reaction chamber.

**18.** A reaction chamber according to claim 1, wherein the reaction chamber (2) has an elongated structure, and the heating element (3) is thermally arranged relative to the reaction chamber (2) to provide a larger amount of heat to an end section relative to a central position of the reaction chamber.

**19.** A method for manufacturing a microreactor, the method comprises the steps of:

 - providing a reaction chamber (2) defining a cavity,
 - providing a heating element (3),
 - providing a first channel (4) connecting the reaction chamber with the surroundings, and
 - providing an auxiliary channel (5) connected to the reaction chamber, said auxiliary channel comprising a capillary hole (6) for pressure reduction,
 wherein the reaction chamber, the first channel, and the auxiliary channel are integrally formed - at least partly - in a single, monolithic element (10), and
 wherein the heating element is produced - at least partly - in and/or on the single, monolithic element (10).

**20.** A method according to claim 19, wherein the monolithic element (10) is selected from the group of: silicon, germanium, carbon, aluminum, and any alloy thereof, steel, silicon carbide, glass, and ceramics.

**21.** A method according to any of claims 19-20, wherein the reaction chamber (2), the auxiliary channel (5) and/or the first channel (4) is formed - at least partly - by etching, micro milling, micro drilling, electric discharge manufacturing (EDM), casting, and/or laser ablation in/on the monolithic element (10).

Fig. 1

Fig. 2

Fig. 3

Fig. 4

Fig. 5

Fig. 6

Fig. 7

Fig. 8

S1

S2

S3

S4

Fig. 9

**European Patent Office**

**EUROPEAN SEARCH REPORT**

Application Number

EP 06 12 0135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | QUAADE ULRICH ET AL: "Microsystem with integrated capillary leak to mass spectrometer for high sensitivity temperature programmed desorption" REVIEW OF SCIENTIFIC INSTRUMENTS, AMERICAN INSTITUTE OF PHYSICS, US, vol. 75, no. 10, 24 September 2004 (2004-09-24), pages 3345-3347, XP012071743 ISSN: 0034-6748 * page 3346, left-hand column, paragraph 1; figure 2 * * page 3346, right-hand column, paragraphs 2,3 *<br>----- | 1-8,10, 13-21 | INV. B01J19/00 |
| X | HANSEN ET AL: "Rate enhancement in microfabricated chemical reactors under fast forced temperature oscillations" CATALYSIS COMMUNICATIONS, ELSEVIER SCIENCE, AMSTERDAM, NL, vol. 7, no. 5, May 2006 (2006-05), pages 272-275, XP005365368 ISSN: 1566-7367 * page 272, right-hand column, paragraph 2 - page 273, right-hand column, paragraph 1 * * figure 1 *<br>----- | 1-5,7-9, 12,13, 15-21 | |
| X | WO 2006/055609 A (VELOCYS INC [US]; TONKOVICH ANNA LEE [US]; HESSE DAVID JOHN [US]; NEAG) 26 May 2006 (2006-05-26) * page 40, line 8 - page 41, line 4; figures 37,38 * * page 9, line 1 - page 10, line 30 * * page 11, line 28 - page 12, line 29 * * page 26, line 27 - page 27, line 11 *<br>-----<br>-/-- | 1-5,7,8, 10-13, 15,17-21 | TECHNICAL FIELDS SEARCHED (IPC)<br><br>B01J |

The present search report has been drawn up for all claims

| Place of search | Date of completion of the search | Examiner |
|---|---|---|
| The Hague | 6 February 2007 | BERTIN-VAN BOMMEL, S |

**European Patent**
**Office**

## EUROPEAN SEARCH REPORT

Application Number

EP 06 12 0135

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/018753 A2 (ACLARA BIOSCIENCES INC [US]; HOOPER HERBERT H [US]; SINGH SHARAT [US];) 6 March 2003 (2003-03-06) * page 4, lines 5-25; figures 1b,2a * * page 13, line 18 - page 17, line 7 * * page 23, lines 11-16 * | 1-5,7, 12,13, 17-21 | |
| X | US 2002/075363 A1 (MCNEELY MICHAEL R [US] ET AL) 20 June 2002 (2002-06-20) * paragraphs [0020], [0024]; figures 1-3; example 1 * | 1-5,7, 19-21 | |
| A | QUAADE ULRICH ET AL: "Fabrication and modeling of narrow capillaries for vacuum system gas inlets" JOURNAL OF APPLIED PHYSICS, AMERICAN INSTITUTE OF PHYSICS. NEW YORK, US, vol. 97, no. 4, 21 January 2005 (2005-01-21), pages 44906-44906, XP012070714 ISSN: 0021-8979 * the whole document * | 1-21 | |
| D,A | J.J. BRANDNER ET AL.: CHEMICAL ENGINEERING JOURNAL, vol. 101, 2004, pages 217-224, XP002418557 * the whole document * | 1-21 | |

TECHNICAL FIELDS
SEARCHED (IPC)

The present search report has been drawn up for all claims

| Place of search | Date of completion of the search | Examiner |
|---|---|---|
| The Hague | 6 February 2007 | BERTIN-VAN BOMMEL, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 0135

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2007

| Patent document cited in search report | | Publication date | Patent family member(s) | Publication date |
|---|---|---|---|---|
| WO 2006055609 | A | 26-05-2006 | NONE | |
| WO 03018753 | A2 | 06-03-2003 | AU 2002335656 A1 | 10-03-2003 |
| US 2002075363 | A1 | 20-06-2002 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Review of Scientific Instruments,* 2004, vol. 75 (10), 3345-3347
- *Chemical Eng.,* 2004, vol. 101, 217-224
- *Journal of Applied Physics,* 2005, vol. 97 (044906), 1-4